(19) **Europäisches Patentamt / European Patent Office / Office européen des brevets**

(11) **EP 1 697 267 B1**

(12) **FASCICULE DE BREVET EUROPEEN**

(45) Date de publication et mention
de la délivrance du brevet:
**10.08.2011 Bulletin 2011/32**

(21) Numéro de dépôt: **04817598.8**

(22) Date de dépôt: **24.12.2004**

(51) Int Cl.:
*C03C 1/02* *(2006.01)*    *C03C 1/00* *(2006.01)*
*C03B 9/14* *(2006.01)*    *H01K 1/28* *(2006.01)*
*C03C 1/10* *(2006.01)*

(86) Numéro de dépôt international:
**PCT/FR2004/003386**

(87) Numéro de publication internationale:
**WO 2005/063641 (14.07.2005 Gazette 2005/28)**

(54) **MELANGE POUR FABRICATION D'UN VERRE AMBRE, VERRE AMBRE, PROCEDE DE FABRICATION DE TUBES ET D'EBAUCHES D'AMPOULE TEINTEE, ET AMPOULES TEINTEES OBTENUES AVEC UN TEL VERRE**

MISCHUNG ZUR HERSTELLUNG VON BRAUNGLAS, BRAUNGLAS, VERFAHREN ZUR HERSTELLUNG VON ROHREN UND ROHLINGEN VON GEFÄRBTEN AMPULLEN UND MIT DEM GLAS ERHALTENE GEFÄRBTE AMPULLEN

MIXTURE FOR THE PRODUCTION OF AN AMBER GLASS, AMBER GLASS, METHOD FOR THE PRODUCTION OF TUBES AND BLANKS OF TINTED BULBS, AND TINTED BULBS OBTAINED WITH SAID GLASS

(84) Etats contractants désignés:
**AT BE BG CH CY CZ DE DK EE ES FI FR GB GR HU IE IS IT LI LT LU MC NL PL PT RO SE SI SK TR**

(30) Priorité: **24.12.2003 FR 0315423**

(43) Date de publication de la demande:
**06.09.2006 Bulletin 2006/36**

(73) Titulaire: **Vermont**
**10270 Montieramey (FR)**

(72) Inventeurs:
• **LEFEVRE, Christian**
**F-10220 Piney (FR)**

• **LEPESQUEUX, François**
**F-10000 Troyes (FR)**

(74) Mandataire: **Benech, Frédéric**
**146-150, Avenue des Champs-Elysées**
**75008 Paris (FR)**

(56) Documents cités:
**EP-B- 1 193 226     US-A1- 2002 117 950**

Remarques:
Le dossier contient des informations techniques présentées postérieurement au dépôt de la demande et ne figurant pas dans le présent fascicule.

## Description

La présente invention concerne un mélange vitrifiable à base d'une composition silico-sodo-calcique pour obtention d'un verre ambré teinté dans la masse.

Elle concerne également un tel verre, ainsi qu'un procédé de fabrication d'une ébauche et/ou d'un tube en verre ambré, et un produit tel que ledit tube ou une ampoule obtenu avec ladite ébauche.

Par couleur ambrée il faut entendre des couleurs qui vont du jaune à l'orange telles que définies par les normes internationales et notamment dans le référentiel de la commission internationale de l'éclairage connu sous la dénomination CIE1931.

La commission internationale de l'éclairage a en effet défini un standard de couleur pour la lumière utilisable sur les véhicules à travers la norme SAE J578 dont les limites pour l'ambre sont les suivantes

Limite vers le rouge y = 0,390
Limite vers le blanc y = 0,79-0,67x
Limite vers le vert y = x-0,12

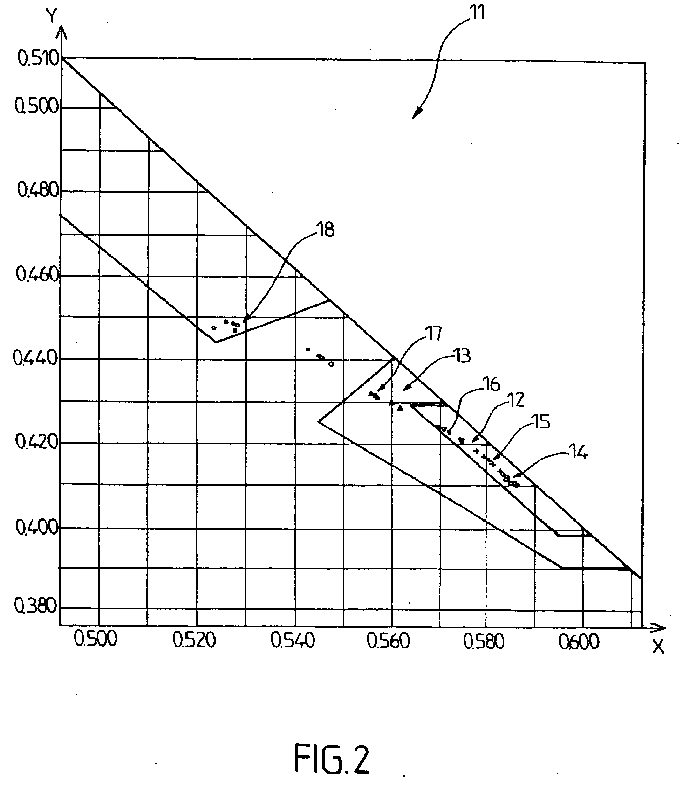

Ceci peut être traduit par un premier quadrilatère élargi dont la représentation graphique se trouve sur le diagramme montrant l'espace colorimétrique normalisé et qui est donné sur la figure 2 accompagnant la présente description.

La standardisation européenne CEE a quant à elle déterminé la réglementation (ECE37) et fixé les limites du champ de tolérance colorimétrique réduit concernant les ampoules clignotantes utilisées en circulation routière comme suit :

Limite vers le jaune y≤0,429
Limite vers le rouge y≤0,398
Limite vers le blanc z≤0,007

Ici encore, ces limites peuvent être représentées par un second quadrilatère, inclus dans le premier (cf figure 2).

Traditionnellement ces couleurs sont obtenues dans les verres de base sodo-calcique par l'addition de cadmium et de sélénium sous forme CdS-Se-CdS, 3CdSe.

Ainsi la société française VERMONT, présente dans la fabrication de verre industriel depuis 1918 et dont l'activité principale s'exerce dans le domaine du soufflage de verre teinté dans la masse pour éclairage domestique et automobile, a-t-elle pu développer et commercialiser du verre ambré sur la base d'une telle technologie dès la fin des années 1980, notamment pour la fabrication de lampes destinées à la signalisation.

Mais la production de ce type d'ampoules, comme celle de tubes en verre à base sodo-calcique présentant une coloration grâce à l'ajout de cadmium/sélénium, a été remise en cause à partir de 1994 par l'apparition d'un procédé de fabrication d'ampoules laquées orangées dont le coût s'est révélé inférieur à celui des ampoules teintées dans la masse, ainsi que par une directive européenne (n° 91/338/CEE du 18/06/1991) incitant à restreindre

l'usage de certains métaux lourds dont le cadmium fait parti.

L'opération de laquage consiste à revêtir une ampoule en verre clair d'un vernis ou d'une laque à base de pigments organiques pour lui donner la teinte ambrée.

Ce procédé, qui n'a d'ailleurs jamais convaincu ni été mis en oeuvre par la société VERMONT comporte cependant des inconvénients.

En effet il est maintenant établi après plusieurs années d'étude et d'utilisation que la qualité et la durabilité du revêtement se dégrade dans le temps.

Avec son vieillissement la teinte s'éclaircit nettement, les chocs thermiques répétés finissant également par décoller le revêtement par plaque ou par le craqueler.

On connaît aussi(EP 1 193 226) un verre ambré utilisé pour des lampes à base de composition silico-sodo-calcique. Malheureusement les teintes obtenues n'ont pas la stabilité ni les nuances requises.

En considération de sa notoriété et de son antériorité dans le domaine du teintage dans la masse pour obtenir une gamme jaune/orangée la société VERMONT a alors développé la présente invention.

Celle-ci vise à pallier les inconvénients précisés ci-dessus et propose un mélange vitrifiable pour obtention d'un verre ambré, un tel verre ainsi qu'un procédé de fabrication de tubes et/ou d'ébauches en verre ambré et un tube ou une ampoule ainsi teintés répondant mieux que ceux antérieurement connus aux exigences de la pratique, notamment en ce qu'elle propose un verre dénué de matériaux toxiques assujettis à réglementations et/ou dangereux pour l'environnement tel que le plomb, le cadmium, le sélénium, ou le chrome, en ce que le verre obtenu présente une couleur réalisée directement sans opération intermédiaire ou supplémentaire de remontée durable en température (par durable il faut entendre plus de quelques minutes, par exemple trente minutes ou une heure), en ce que ladite couleur s'inscrit dans le cadre des normes internationales de la signalisation en vigueur, est stable dans le temps et invariable (ne nécessitant aucun traitement pour la coloration après mise en forme) et n'est pas sensible aux chocs thermiques, et en ce que elle permet une cadence de fabrication importante (par exemple dans le cas de fabrication d'ébauches, de l'ordre de 90 ébauches à la minute) pour un coût amélioré.

Dans ce but la présente invention propose notamment un mélange vitrifiable à base d'une composition silico-sodo-calcique pour obtention d'un verre ambré teinté dans la masse, caractérisé en ce que ledit mélange comprend pour 100% en poids de mélange, de 0,01% à 1% en poids de bisulfure de Molybdène et de 0,01% à 7% en poids de sulfure de Strontium.

Dans des modes de réalisation avantageux on a de plus recours à l'une et/ou à l'autre des dispositions suivantes :

- le % de sulfure de Strontium est inférieur ou égal à 4% du poids du mélange;
- le % de bisulfure de Molybdène est inférieur ou égal à 0,3% du poids du mélange;
- le taux de fer du mélange est inférieur à 0,04% ;
- le mélange est dénué de Soufre ;

Par dénué de Soufre, il faut entendre un % en poids de Soufre inférieur à 0,01% ou encore inférieur à 0,005% ;

- le mélange comporte jusqu'à 0,2% d'aluminium en poudre.

L'invention propose également un verre ambré teinté dans la masse obtenu à partir du mélange ci-dessus comprenant pour 100% en poids de verre fondu $SIO_2$ : entre 65 et 72% (Pourcentages en masse pondérale)

$B_2O_3$ : entre 0,5 et 3%
$Na_2O$ : entre 5 et 15%
$K_2O$ : entre 5 et 15%
$Lio_2$ : entre 0.2 et 2%
$CaO$ : entre 1 et 5%
$BaO$ : entre 0,5 et 4%
$A1_2O_3$ : entre 0,5 et 3%
$MoO_3$ : entre 0,05 et 0,5%
$SO_3$ : entre 0,1 et 0,7%
$SrO$ : entre 2 et 7%

le $MoO_3$ et le $SO_3$ étant obtenus à partir du bisulfure de Molybdène $MoS_2$ et du sulfure de Strontium $SrS$ tels que le rapport $MoS_2/SrS$ dans le mélange soit compris entre 0,015 et 0,04. Avantageusement le rapport est compris entre 0,015 et 0,025.

Encore plus avantageusement le mélange est dénué de Soufre.

L'invention propose également un procédé d'obtention du verre ambré tel que décrit ci-avant.

Elle propose aussi un procédé de fabrication d'un tube ou d'une ébauche en verre ambré à partir d'un mélange à base d'une composition silico-sodo-calcique, caractérisé en ce que on réalise le mélange en additionnant à la composition comprenant entre 65 et 72% de $SiO_2$ et entre 5 et 15% de $Na_2O$, pour 100% en poids de mélange, de 0,01% à 1% en poids de bisulfure de Molybdène, et de 0,01% à 7% en poids de sulfure de Strontium, puis on élabore le verre à partir dudit mélange dans un four de façon connue en elle même, et on forme directement le tube ou l'ébauche dans sa couleur définitive sans traitement thermique complémentaire autre que le refroidissement contrôlé pour éliminer les contraintes thermiques.

Classiquement ce refroidissement consiste à refroidir lentement (de l'ordre de 20 minutes) les ébauches de verre formées d'environ 550°C jusqu'à la température ambiante. Le refroidissement s'effectue en général dans un tunnel de relâchement des tensions internes.

On notera que dans l'art antérieur, il est systématiquement prévu un traitement thermique d'au moins une heure, nécessaire pour développer la teinte du verre de façon correcte par exemple autour de 500°C.

Tel n'est pas le cas avec la présente invention, la composition du mélange permettant de s'en affranchir, de façon surprenante et inattendue.

Avantageusement le verre du tube ou de l'ébauche est maintenu à la température de sortie de fabrication (entre 500 et 550°C) durant quelques minutes, par exemple un temps inférieur à cinq minutes, et plus particulièrement de une à deux minutes avant refroidissement.

Avec le procédé selon l'invention et le dispositif qui le met en oeuvre on peut ainsi traiter de l'ordre de 50 m du tube ou de 70 à 100 ébauches (obtenues par soufflage de goutte de verre) à la minute.

Avantageusement le procédé est caractérisé en ce que le pourcentage de sulfure de Strontium est inférieur ou égal à 4% du poids du mélange.

Dans un mode de réalisation avantageux le procédé est caractérisé en ce que le pourcentage de bisulfure de Molybdène est inférieur ou égal à 0,3% du poids du mélange.

Egalement avantageusement on élimine les particules de fer de façon magnétique pour que le taux du fer du mélange soit inférieur à 0,04%.

Encore avantageusement le mélange est exempt de soufre (inférieur à 0,01% et/ou à l'état de trace).

Dans un autre mode de réalisation avantageux on contrôle la nuance de la teinte du verre en modifiant les paramètres d'oxydoréduction à l'intérieur du four de chauffe par ajustement da la quantité d'un réducteur à base de poudre métallique jusqu'à hauteur de 0,3% en poids du mélange.

L'invention propose également une ampoule en verre ambré pour un système d'éclairage, par exemple domestique et de décoration, obtenue à partir d'un tube ou d'une ébauche et d'un procédé tels que décrits ci-avant, ou encore pour utilisation comme clignotant ou comme moyens de signalisation d'automobiles.

L'ébauche formée à partir d'une goutte de verre dès la sortie du four, et dont la teinte ambrée rentre dans les normes de couleurs requises est ainsi obtenue de façon définitive sans traitement thermique ou tout autre opération complémentaire nécessaires pour figer la teinte connue dans le cadre des procédés de l'art antérieur.

L'invention sera mieux comprise à la lecture de la description qui suit de modes de réalisation de l'invention donnés à titre d'exemples non limitatifs.

La description se réfère aux dessins qui l'accompagnent dans lesquels :

- La figure 1 est une vue latérale d'une ampoule réalisée avec un verre fabriqué selon l'invention.
- Les figures 1A à 1C sont des vues latérales d'ébauches en verre pour différentes formes d'ampoules selon l'invention.
- La figure 2 donne le diagramme montrant l'espace colorimétrique normalisé dans lequel se placent de façon fiable et stable les colorations des ampoules selon l'invention.
- La figure 3 est une vue en perspective schématique d'un dispositif mettant en oeuvre un mode de réalisation du procédé selon l'invention.
- La figure 4 est une vue schématique montrant les étapes de formation par soufflage des ébauches avec le dispositif de la figure 3.

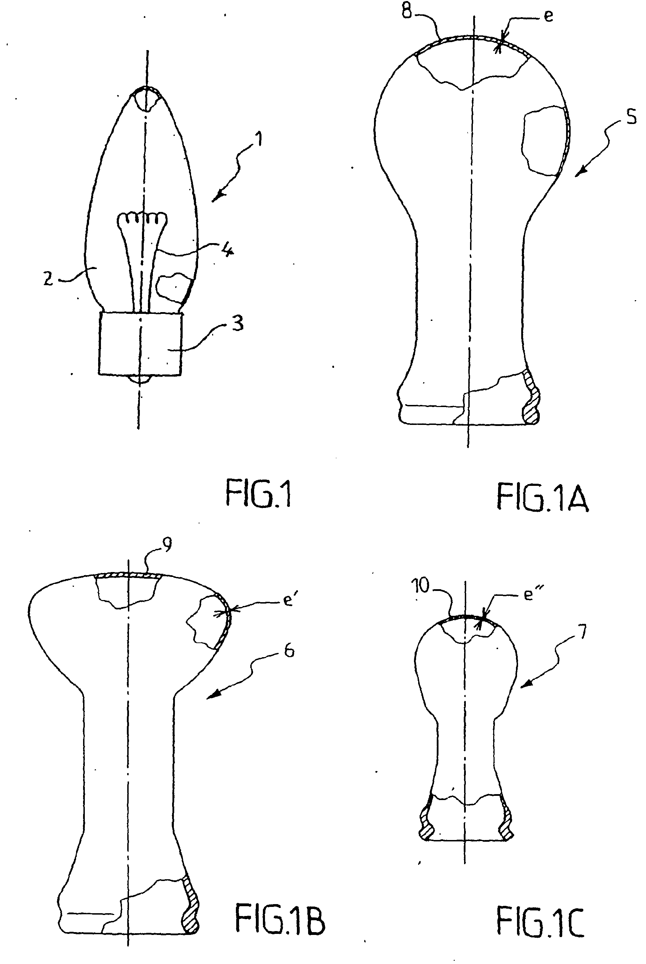

La figure 1 montre une ampoule 1, comprenant une ébauche de verre 2, en forme de fuseau, à base de verre du type SiO2-R2O-RO où R2 est un élément alcalin et RO un élément alcalino-terreux.

L'ébauche est de couleur orange. Elle est obtenue à partir d'un mélange vitrifiable formé avec de la silice traitée et comprend par exemple.4% de sulfure de strontium (SrS), 0,25% de bisulfure de molybdène (MoS2) et 0,2% d'aluminium en poudre (Al) avec un taux de fer (Fe203) inférieur à 0,04%.

L'ampoule 1 comprend de façon connue en elle-même un culot 3 de connexion avec un système d'alimentation électrique, et un filament 4.

On sait qu'en présence de sulfure dans des conditions de fusion, celui-ci forme des polysulfures qui, avec les oxydes de fer présents dans le mélange, développent une teinte allant des marrons clairs aux bruns en fonction de l'équilibre ionique des arrangements des ions $Fe^{2+}$, $Fe^{3+}$, $S^{2-}$ et $S^{2-}_4$.

En tenant compte de ce constat, on va utiliser dans le mélange selon le mode de réalisation de l'invention plus particulièrement décrit ici, des matières sélectionnées pour leur faible teneur en fer et/ou que l'on va épurer de leurs particules métalliques, par exemple par passage au travers de grilles magnétiques, pour obtenir les teintes de verre ambré recherchées.

On a également observé que la formation de sulfo ferrites alcalins selon la réaction :

$$2FeS+Na2S2 = 2NaFeS2$$

exerçait une influence difficilement maîtrisable sur la teinte, qui a ainsi tendance à devenir marron.

En utilisant des sulfures, on favorise cependant l'équilibre ce qui permet de mieux s'approcher de la teinte ambrée recherchée.

Dans le mode de réalisation plus particulièrement décrit, cet équilibre est encore renforcé par la présence de réducteur tel que l'aluminium en poudre, une forte oxydation conduisant toujours à une dérive progressive de la couleur vers les marrons.

Quant au Molybdène de solubilité réduite dans le verre (<1%), l'homme du métier sait qu'un surdosage peut s'assimiler à hautes températures à une solution en sursaturation qui va cristalliser lors du refroidissement ou d'un maintien à basse température, la présence de fer accentuant le phénomène jusqu'à créer du « verre aventurine ».

En fait, il a été observé par l'inventeur que la présence conjointe d'éléments sulfure et molybdène avec un faible taux de fer, et selon les propositions induites par le mélange décrit ci-avant, permettait de façon inattendue le développement d'une teinte allant du jaune au rouge orangé en passant par des orangés, teinte dont les coordonnées chromatiques s'inscrivaient de façon répétitive dans les normes internationales actuellement en vigueur en signalisation, pour des températures de fonctionnement correspondant aux fourchettes classiques de fusion.

Ainsi les courbes de transmission réalisées sur des séries d'échantillons obtenus avec le procédé selon l'invention, à partir de mesures effectuées à l'aide d'un spectromètre UV-VIS-NIR lambda 19 Perkins Elmer, démontrent une excellente absorption dans les ultra-violets ainsi que dans le domaine visible jusqu'à 500 nanomètres.

En d'autres termes la totalité des bleus et une partie des verts se trouvent absorbés, seuls les jaunes et rouges étant transmis.

Bien que l'augmentation brutale de la transmission aux environs de 550nm soit moins marquée, le résultat obtenu est donc très proche de celui obtenu avec les verres à base de CdS, la coloration étant de type anionique, où l'équilibre de $s^{2-}$ et $S^2n-$ est déterminant.

En fait on note ainsi qu'une partie des sulfures et polysulfures présents favorisent des liaisons complexes avec le molybdène en faible quantité, pour former de nouveaux composés tels que des sulfomolybdates et thiomolybdates sans doute responsables de l'apparition de la couleur ambre recherchée.

Enfin, en jouant sur le rapport Mo03/S03 par le biais du jeu sur le rapport MoS2/SrS du mélange, on observe qu'on détermine la nuance de la teinte désirée.

Lorsque ce rapport augmente, la dérive se fait vers les orangés. Lorsque celui-ci diminue, la dérive se fait vers les jaunes, ledit rapport variant entre de l'ordre de 0,010 et de l'ordre de 0,04.

Ainsi, avec l'invention l'utilisation du mélange vitrifiable décrit ci-avant, accompagné de la maîtrise des paramètres de fusion (température et temps de séjour dans le four) connue en elle-même, et une oxydo-réduction du bain de verre optimisée grâce aux proportions adaptées, permet la fabrication d'ébauches en direct dans la teinte désirée sans traitement thermique supplémentaire.

On a représenté sur les figures 1A, 1B et 1C d'autres modes de réalisation d'ébauches de verre 5, 6 et 7 obtenue par soufflage d'une goutte de verre teinté dans la masse selon l'invention, l'ébauche 1C étant prévue par exemple pour clignotant d'automobile.

L'épaisseur e, e', e" de la paraison 8, 9, 10, des ébauches pour ampoule dans leur partie éclairante est de l'ordre de 4/10e de mm. Elle est fonction du poids du verre et de sa viscosité, avec une dispersion pouvant aller jusqu'à de l'ordre de 2/10e de mm, les caractéristiques ci-dessus étant également applicables à l'ampoule de la figure 1.

Dans l'art antérieur il était difficile voire impossible de donner systématiquement une teinte précise à épaisseur de paraison égale, ce qui entraînait éventuellement des teintes en dehors de la norme de couleur recherchée en fonction de la variation de couleurs incontrôlable, oscillant autour de la moyenne.

Avec l'invention, la dispersion n'étant plus due qu'à la différence d'épaisseur à peu près contrôlable mécaniquement, les teintes sont maintenant toujours dans la fourchette acceptable.

On a représenté sur la figure 2 le diagramme 11 de chromaticité montrant les caractéristiques de couleur de verres dans le triangle de couleur ambre ou orange des verres selon l'invention selon la Norme ECE « Economic commission of Europe » (référencée 12) et selon la norme SAE « Society of automotive engineers » (référencée 13). Les limites pour la couleur ambre dans ces normes peuvent être traduites par des quadrilatères élargies sur le diagramme, la norme ECE 12 étant inclue dans le quadrilatère le plus large de la norme SAE 13, vers la zone de plus haute pureté de la couleur.

Les cercles 14, les étoiles 15 et les triangles 16, 17 correspondent aux compositions de verres suivantes comprenant par exemple

> SiO2 68% (Pondéral)
> B2O3 1,65%
> Na20 9,10%
> K20 8,10%
> LiO2 1%
> CaO 2,5%
> BaO 2,5%
> Al203 1,8%
> SrO 5%

dans lesquels on fait varier les composants MoS2 et SrS, pour que le rapport MoS2 / SrS soit de 0,017 pour les cercles 18, à 0,038 pour les étoiles 15 en passant par le rapport de 0,03 pour les triangles 17.

Les comparatifs avec les normes se font visuellement, des mesures colorimétriques étant menées à l'aide d'une sphère d'intégration et d'un colorimètre fabriqué par la société japonaise MINOLTA sous la référence Chroma-meter CL100 relié à un calculateur de type connu, par exemple un calculateur de la société MINOLTA connu sous la référence DP100 pour avoir des valeurs globales de couleur.

Des mesures sur des zones plus précises sont ensuite réalisées à l'aide d'un colorimètre de marque THOMA sous la référence TF6-120.

Dans les deux cas, l'illuminant est normalisé de type "A", dont la température de couleur proximale est de 2856°K. Cet illuminant est relié à une alimentation stabilisée dont la tension est ajustée à 13,5V.

Les mesures se font sur deux points x et y selon le référentiel CIE 1931 (Commission internationale de l'éclairage). Elles permettent de définir la saturation, la longueur d'onde dominante ainsi que la position de la couleur de l'échantillon sur le diagramme de chromaticité mais surtout la position par rapport aux deux normes existantes définissant la teinte ambre destinée à la signalisation.

Sur cet espace de couleur, sont donc positionnées les figures géométriques (étoiles 15, triangles 17, ...) représentatives de quelques nuances de teinte que le rapport bisulfure de molybdène/sulfure de strontium permet d'atteindre.

L'augmentation de ce rapport, démontre la capacité de production d'une multitudes de nuances différentes allant du verre jaune (croix cerclées 18) de coordonnées chromatiques moyennes : x = 0,525, y = 0,448, vers des oranges dont les coordonnées se situent à l'intérieur de la norme SAE (triangles 17) jusqu'à des rouges orangées à l'intérieur des normes ECE et SAE de coordonnées chromatiques moyennes : x = 0,584, y = 0,412 (cercles 14), en passant par des jaunes orangés. Les étoiles 15 représentent les mesures de couleur effectuées sur des lampes finies par un laboratoire de contrôle. Coordonnées moyennes: X = 0,579, y = 0, 416.

On a donné ci-après quelques compositions de verre obtenues avec les mélanges selon l'invention.

<u>EXEMPLE 1 :</u>

La base du verre est de type silico-sodo-calcique, les constituants principaux étant les suivants :

> SI02 65-72% (Pourcentages en masse pondérale)
> B203 0,5-3%
> Na2O 5-15%
> K20 5-15%
> LiO2 0.2-2%
> CaO 1-5%
> MgO 0,2-2%
> SrO 2-7%
> BaO 0,5-4%
> Al2O3 0,5-3%
> MoO3 0,05-0,5%
> SO3 0,1-0,7%

Des éléments comme les oxydes de fer, de titane, de magnésium et de zirconium Fe2O3, TiO2, MgO, Zr02 ... sont présents en faibles quantités (impuretés non ajoutées volontairement).

Sur cette base, les propriétés physiques moyennes du verre obtenu sont les suivantes, la terminologie anglosaxonne en général en vigueur pour désigner ces paramètres étant conservée :

Point de fusion (« Melting point »): (log η = 2) 1360°
Point de prélèvement (« Gob point ») : (log η = 3) 1110°
Point de ramolissement (« Softening point ») (Littleton log η = 7,6) 675°
Point de recuit (« Annealing point») : (log η = 13) 515°
Tg (log η = 13,3) : 500°
Point de trempe (« Strain point ») : (log η = 14,5) 460°
Δ1 20/300° = 93,10⁻⁷

EXEMPLE 2 :

Cette base peut avantageusement être adaptée au verre sodo-calcique couramment présent dans l'industrie de la lampe d'éclairage avec un coût moindre, ce qui donne les proportions suivantes :

SIO2 68-72% Pondéral
Na20 12-16%
K2O 0,5-1,5%
Li02 0.2-1%
CaO 6-9%
MgO 0,2-2%
BaO 0,5-2%
SrO 2-7%
BaO 0,5-4%
Al2O3 1-3%
MoO3 0,05-0,5%
SO3 0,1-0,7%

Des éléments comme Fe203, Ti02, Zr02 ... sont également présents en faibles quantités (impuretés).

Les caractéristiques physiques moyennes du verre sont alors les suivantes :

Point de fusion (« Melting point ») : (log η = 2) 1390°
Point de prélèvement (« Gob point ») : (log η = 3) 1140°
Point de ramolissement (« Softening point ») (log η = 4) 975°
Point de recuit (« Annealing point ») : (log η = 7,6) 695°
Tg (log η = 13) : 530°
Point de trempe (« Strain point ») : (log η = 13,3) 503°

Δl de 20 à 300° = 10-7° C-1=93

Elles peuvent être utilisées pour le montage de lampes destinées à la signalisation dans l'automobile.

Les ébauches ainsi fournies dans des nuances de teinte adaptée peuvent également être utilisées pour le montage de lampes d'éclairage domestiques et/ou de décoration avec une grande diversité de formes et de teintes réalisables.

Ainsi les verres produits peuvent remplacer avantageusement les ampoules fantaisies destinées à la décoration et revêtues d'un vernis ambre comme par exemple montrés sur les figures 1, 1A et 1B.

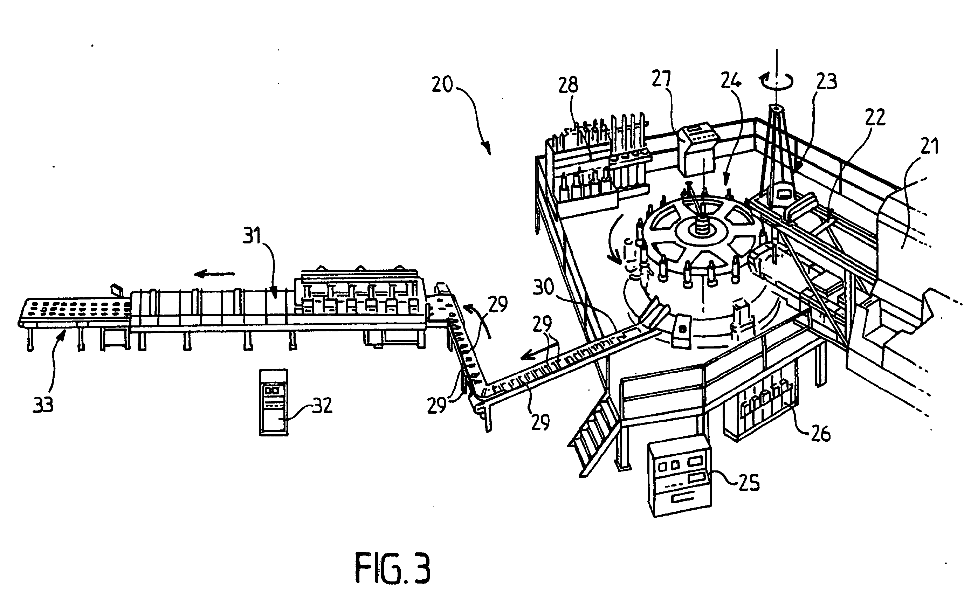

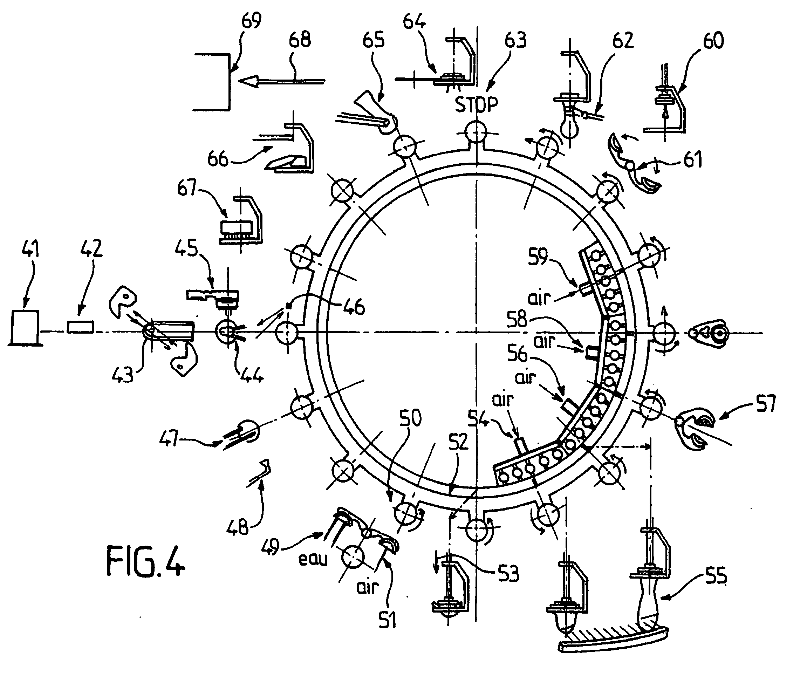

On va maintenant décrire en référence aux figures 3 et 4 les procédés de fabrication d'ébauches en continu selon le mode de réalisation de l'invention plus particulièrement décrit ici.

La figure 3 montre un dispositif 20 permettant de mettre en oeuvre le procédé selon l'invention.

Il comporte le four de fusion du verre 21, un canal 22 de remplissage de verre en fusion à partir du four, un distributeur 23 alimentant le carrousel 24 de formation des ébauches qui sera plus particulièrement décrit en référence à la figure 4, des moyens de régulation et de contrôle par automate 25 d'alimentation en air comprimé 26, d'alimentation en air de refroidissement 27 et de régulation et de distribution de l'air soufflé 28.

Celui-ci comporte notamment un compresseur et des moyens de stabilisation de la pression exercée lors du soufflage par une chaîne de contrôle de procédé avec automate

Le carrousel alimente ensuite en ébauches formées 29, un convoyeur à bandes 30 qui traverse en continu un tunnel de refroidissement dont le but est de maintenir la température des ébauches à environ 550° durant par exemple 1 à 2mn de façon à libérer le verre de ses tensions mécaniques internes créées lors du refroidissement brutal (1200° à 580°) sur la machine durant le moulage puis de refroidir ces ébauches lentement (de l'ordre de 20 mn) jusqu'à la température ambiante, cette opération n'influençant aucunement la couleur.

Des moyens de contrôle 32 (automate) permettent la bonne opération du tapis convoyeur, les ébauches obtenues en continu à une cadence par exemple de 90 la minute et à leur couleur définitive étant ensuite refroidies dans un tunnel 31 pendant de l'ordre de 20 minutes pour passer de 500°C/600°C à 40°C. Elles sont récupérées à la sortie du tunnel en 33 pour être stockées en 34.

La figure 4 est une vue de dessus schématique du carrousel 24 décrit ci-avant et qui permet la formation des ébauches en continu par soufflage.

On a représenté référencé de 41 à 69 les différentes étapes/postes de formation de l'ébauche mettant en oeuvre ce carrousel pour la fabrication par soufflage selon le mode de réalisation de l'invention plus particulièrement décrit ici.

Après préparation du mélange dans les proportions déterminées, on l'introduit par batch successif dans le four pour alimenter le bain de verre en fusion. La pâte de verre est ainsi portée de façon connue à la température de 1300°C à 1500°C, où elle se maintient pendant un temps déterminé de fusion de façon à la portée de l'homme du métier.

La pâte en fusion s'écoule lentement vers le carrousel, pour être prélevée à une température de l'ordre de 1150°C à partir d'une cuvette, la formation de l'ébauche étant ensuite effectuée en fonction des étapes suivantes.

41. Préparation du verre. (Température cuvette)
42. Formation de la goutte. (Feeder plongeur)
43. Coupe de la goutte. (Ciseaux)
44. Position de la goutte sur le marbre.
45. Pressage de la goutte en forme de pastille.
46. Transfert et dépôt sur la table.
47. Refroidissement localisé de la pastille.
48. Refroidissement d'allongement.
49. Pulvérisation à l'eau des 1/2 moules garnis.
50. Début de rotation des tables.
51. Elimination des excès d'eau dans les moules.
52. Auto-formation de la paraison.
53. Descente de la buse formation de la bague.
54. 1$^{er}$ soufflage dans la paraison.
55. Soufflage sur l'extérieur des paraisons.
56. 2$^{éme}$ soufflage dans la paraison.
57. Fermeture des moules.
58. 1$^{er}$ soufflage de remplissage.
59. 2$^{ème}$ soufflage de finition.
60. Remontée de la buse.
61. Ouverture du moule.
62. Chalumeau de réchauffage.
63. Arrêt de rotation de la table.
64. Séparation de la bagué dans l'ébauche.
65. Ejection de l'ébauche.
66. Ejection de la bague, arrosage des tables.
67. Refroidissement à l'air des tables.
68. Convoyage des objets à l'arche de refroidissement.
69. Entrée dans l'arche de refroidissement pour évacuation des contraintes thermiques uniquement.

Les étapes 41 à 69 durent de l'ordre de 30 secondes à 2 minutes en fonction de la vitesse de rotation séquentielle du carrousel.

Comme il va de soi et comme il résulte également de ce qui précède, la présente invention n'est pas limitée aux modes de réalisation plus particulièrement décrits. Elle en embrasse au contraire toutes les variantes et notamment celles où ce sont des tubes et non des ébauches qui sont ainsi réalisés.

Dans le cas des procédés de fabrication de tubes plusieurs systèmes connus sont applicables, connus sous les dénominations Système Danner et Système Vello.

Plus précisément il existe quatre modes de fabrication industrielle des tubes en verre, dont ces deux modes représentent plus de 90% de la production totale.

Avec le Système Danner, le verre fondu, à la bonne viscosité s'écoule en filet par l'intermédiaire d'une petite goulotte (bec verseur) sur un mandrin creux, généralement en réfractaire.

Ce mandrin est incliné vers le bas selon un angle d'environ 30°.

Le mandrin possède quant-à-lui une longueur d'environ 1m à 1,5m et un diamètre dépendant des fabrications de 15 à 30cm. Le mandrin est animé d'un mouvement de rotation lente permettant au verre lors de son écoulement de s'enrouler sur ce tube réfractaire en une épaisseur régulière.

Le tirage se fait à partir de l'extrémité du mandrin dans lequel on souffle de l'air à basse pression permettant la formation d'un tube de verre dont le diamètre et les épaisseurs sont liés : à la viscosité du verre, au type de mandrin, à la quantité d'air insufflée mais surtout à la vitesse d'étirage.

Dans ses premiers mètres d'étirage, le tube encore rouge est maintenu dans un caisson isotherme afin d'éviter les chocs thermiques puis subit un refroidissement contrôlé. Dès que la température et la viscosité le permettent, le tube vient reposer sur des molettes pour permettre son guidage durant le refroidissement.

Le tube est ainsi étiré sur des distances de 30 à 100 m durant lesquelles il subit des contrôles en continu de diamètre (laser) qui régulent la vitesse du système d'étirage avant d'être découpé à la dimension par chocs thermiques généralement puis éventuellement rebrûlé aux extrémités avant conditionnement.

Le système Vello permet quant-à-lui une meilleure maîtrise ainsi qu'une qualité supérieure dans la stabilité des épaisseurs. De plus l'absence de mandrin réduit les temps de non production liés à son changement (usure et casse fréquentes) ainsi que les problèmes « d'amorçage » de la ligne.

Ce système comprend une cuvette traditionnelle en sortie de four munie d'un orifice calibré (rondelle) se situant à grande hauteur par rapport au sol.

Un tube muni d'un cône dont la base vient limiter le passage de la rondelle orifice. De l'air est également insufflé pour permettre la formation d'un tube (la fabrication des baguettes se fait sans air mais les principes sont identiques). Suivant ce principe, le verre s'écoule naturellement par gravité d'une part aidé par la force conditionnée par la vitesse d'étirage en formant une courbe très ample.

La suite est identique au premier procédé.

Les deux procédés (Danner & Vello) ci-dessus décrits sont alimentés en verre par des fours à bassin dont la conception et la technologie sont identiques à celui décrit ci-avant sauf dans la partie terminale. La tirée journalière de tubes selon l'invention va ainsi être comprise entre environ 5t/24h à plusieurs dizaines de tonnes/24h.

Pour l'application plus particulièrement décrite selon l'invention, c'est-à-dire la production de tubes ambre en vue de leur transformation dans des formes telles que l'ampoule destinée à l'éclairage, les diamètres peuvent varier de 5 à 40 mm.

De manière préférentielle et en vue d'une utilisation principale destinée à l'éclairage de signalisation la section des tubes sera comprise entre 5 mm et 20 mm.

Indépendamment du coefficient de dilatation qui restera fixe et adapté au soudage à d'autres verres (pied de filament) sans création de tensions pouvant induire des ruptures, les caractéristiques physico-chimiques seront adaptables aux modes de formage ainsi qu'aux types de fusion. Particulièrement en ce qui concerne la viscosité que l'on pourra modifier, dans une certaine mesure, en fonction des conditions requises par l'étirage du tube, sa transformation en lampe ou encore de son montage en ampoule par scellement sur des machines automatisées.

Ainsi, l'intervalle de températures durant lequel on peut façonner à chaud le verre, encore appelé palier de travail, pourra être allongé ou raccourci dans les domaines de viscosité de η = 3 dPa s à η = 7,6 dPa s pour ce qui concerne l'étirage ou dans le domaine de viscosités η = 6 dPa s à η = 9 dPa s pour le travail de transformation et de scellement.

Les ajustements se faisant sur les produits chimiques du mélange enfourné par transfert et remplacement d'une fraction d'un produit par un autre en pourcentage de leur masse molaire selon les proportions telles que décrites ci-avant.

En résumé, la fabrication des tubes avec l'invention permet d'obtenir des tubes de verre ambré dénué de matériaux toxiques assujettis à réglementations et/ou dangereux pour l'environnement tel que le plomb, le cadmium, le sélénium ou le chrome. Elle permet de conserver la particularité selon laquelle le verre obtenu présente une couleur réalisée directement sans opération intermédiaire ou supplémentaire de remontée durable en température, ladite couleur s'inscrivant dans le cadre des normes internationales de la signalisation en vigueur, étant stable dans le temps et invariable tant lors du réchauffage du tube pour transformation que lors du formage en ampoule et du scellement final.

**Revendications**

1. Mélange vitrifiable à base d'une composition silico-sodo-calcique pour obtention d'un verre ambré teinté dans la masse, **caractérisé en ce que** ledit mélange comprend pour 100% en poids de mélange, de 0,01% à 1% en poids de bisulfure de Molybdène et de 0,01% à 7% en poids de sulfure de Strontium.

2. Mélange selon la revendication 1, **caractérisé en ce que** le % de sulfure de Strontium est inférieur ou égal à 4% du poids du mélange.

3. Mélange selon l'une quelconque des revendications précédentes, **caractérisé en ce que** le % de bisulfure de Molybdène est inférieur ou égal à 0,3% du poids du mélange.

4. Mélange selon l'une quelconque des revendications précédentes, **caractérisé en ce que** le taux de fer du mélange est inférieur à 0,04%.

5. Mélange selon l'une quelconque des revendications précédentes, **caractérisé en ce que** le mélange est dénué de Soufre.

6. Mélange selon l'une quelconque des revendications précédentes, **caractérisé en ce que** le mélange comporte jusqu'à 0,2% d'aluminium en poudre.

7. Verre ambré **caractérisé en ce qu'**il est obtenu par la fusion d'un mélange selon l'une quelconque des revendications précédentes.

8. Verre ambré teinté dans la masse obtenu selon la revendication 7, **caractérisé en ce que** ledit verre comprend pour 100% en poids de verre fondu

   $SiO_2$ 65-72%
   $B_2O_3$ 0,5-3%
   $Na_2O$ 5-15%
   $K_2O$ 5-15%
   $LiO_2$ 0.2-2%
   $CaO$ 1-5%
   $BaO$ 0,5-4%
   $Al_2O_3$ 0,5-3%
   $MoO_3$ 0,05-0,5%
   $SO_3$ 0,1-0,7%
   $SrO$ 2-7%

   le $MoO_3$ et le $SO_3$ étant obtenus à partir du disulfure de Molybdène $MoS_2$ et du sulfure de Strontium $SrS$ tels que le rapport $MoS_2/SrS$ dans le mélange soit compris entre 0,015 et 0,04.

9. Verre ambré selon la revendication 8, **caractérisé en ce que** le rapport $MoS_2/SrS$ est compris entre 0,015 et 0,025.

10. Verre ambré selon la revendication 9, **caractérisé en ce que** le mélange est dénué de Soufre.

11. Procédé de fabrication d'un tube ou d'une ébauche (2, 5, 6, 7, 29) en verre ambré à partir d'un mélange à base d'une composition silico-sodo-calcique, dans lequel on forme une composition comprenant entre 65 et 72% de $SiO_2$ et entre 5 et 15% de $Na_2O$, pour 100% en poids de mélange, **caractérisé en ce que** on additionne à cette composition de 0,01% à 1% en poids de bisulfure de Molybdène et de 0,01% à 7% en poids de sulfure de Strontium, puis on élabore le verre à partir dudit mélange dans un four de façon connue en elle même, et on forme directement le tube ou l'ébauche dans sa couleur définitive sans traitement thermique complémentaire autre que le refroidissement contrôlé pour éliminer les contraintes thermiques.

**12.** Procédé de fabrication d'une ébauche selon la revendication 11, **caractérisé en ce que** le % de sulfure de Strontium est inférieur ou égal à 4% du poids du mélange.

**13.** Procédé de fabrication d'une ébauche selon l'une quelconque des revendications 11 et 12, **caractérisé en ce que** le % de bisulfure de Molybdène est inférieur ou égal à 0,3% du poids du mélange.

**14.** Procédé de fabrication d'une ébauche selon l'une quelconques des revendications 11 à 13, **caractérisé en ce que** on élimine les particules de fer de façon magnétique pour que le taux de fer du mélange soit inférieur à 0,04%.

**15.** Procédé de fabrication d'une ébauche selon l'une quelconque des revendications 11 à 14, **caractérisé en ce que** le mélange est dénué de Soufre.

**16.** Procédé de fabrication d'une ébauche selon l'une quelconque des revendications 11 à 15, **caractérisé en ce que** on contrôle la nuance de la teinte du verre en modifiant les paramètres d'oxydoréduction à l'intérieur du four de chauffe par justement de la quantité d'un réducteur à base de poudre métallique jusqu'à hauteur de 0,3% en poids du mélange.

**17.** Ampoule en verre ambré pour système d'éclairage obtenue à partir d'une ébauche ou d'un tube produit avec le procédé selon l'une quelconque des revendications 11 à 16, pour utilisation comme clignotant ou moyen de signalisation d'automobiles.

**Claims**

**1.** Vitrifiable mixture based on a silico-sodo-calcic composition for obtaining an amber-coloured glass tinted in the mass, **characterised in that** said mixture comprises for 100% by weight of mixture, from 0.01% to 1% by weight of molybdenum bisulphide and from 0.01% to 7% by weight of strontium sulphide.

**2.** Mixture according to claim 1, **characterised in that** the % of strontium sulphide is less than or equal to 4% of the weight of the mixture.

**3.** Mixture according to any one of the preceding claims, **characterised in that** the % of molybdenum bisulphide is less than or equal to 0.3% of the weight of the mixture.

**4.** Mixture according to any one of the preceding claims, **characterised in that** the level of iron in the mixture is less than 0.04%.

**5.** Mixture according to any one of the preceding claims, **characterised in that** the mixture is devoid of sulphur.

**6.** Mixture according to any one of the preceding claims, **characterised in that** the mixture comprises up to 0.2% of powdered aluminium.

**7.** Amber-coloured glass, **characterised in that** it is obtained by melting a mixture according to any one of the preceding claims.

**8.** Amber-coloured glass tinted in the mass according to claim 7, **characterised in that** said glass comprises for 100% by weight of melted glass

$SiO_2$ 65-72%
$B_2O_3$ 0.5-3%
$Na_2O$ 5-15%
$K_2O$ 5-15%
$LiO_2$ 0.2-2%
CaO 1-5%
BaO 0.5-4%
$Al_2O_3$ 0.5-3%
$MoO_3$ 0.05-0.5%
$SO_3$ 0.1-0.7%
SrO 2-7%

the $MoO_3$ and the $SO_3$ being obtained from molybdenum disulphide $MoS_2$ and strontium sulphide SrS such that the $MoS_2$/SrS ratio in the mixture lies between 0.015 and 0.04.

**9.** Amber-coloured glass according to claim 8, **characterised in that** the $MoS_2$/SrS ratio lies between 0.015 and 0.025.

**10.** Amber-coloured glass according to claim 9, **characterised in that** the mixture is devoid of sulphur.

**11.** Method for producing a tube or a blank (2, 5, 6, 7, 29) of amber-coloured glass from a mixture based on a silico-sodo-calcic composition, in which a composition is formed comprising between 65 and 72% of $SiO_2$ and between 5 and 15% of $Na_2O$ for 100% by weight of mixture, **characterised in that** from 0.01% to 1% by weight of molybdenum bisulphide and from 0.01% to 7% by weight of strontium sulphide are added to this composition, then the glass is processed from said mixture in a furnace known per se, and the tube or the blank is formed directly in its final colour without additional thermal treatment other than controlled cooling to eliminate thermal stresses.

12. Method for producing a blank according to claim 11, **characterised in that** the % of strontium sulphide is less than or equal to 4% of the weight of the mixture.

13. Method for producing a blank according to any one of claims 11 and 12, **characterised in that** the % of molybdenum bisulphide is less than or equal to 0.3% of the weight of the mixture.

14. Method for producing a blank according to any one of claims 11 to 13, **characterised in that** the particles of iron are eliminated magnetically so that the level of iron in the mixture is less than 0.04%.

15. Method of producing a blank according to any one of claims 11 to 14, **characterised** that the mixture is devoid of sulphur.

16. Method of producing a blank according to any one of claims 11 to 15, **characterised in that** the shade of the tinting of the glass is controlled by modifying the oxidoreduction parameters inside the heating furnace by adjusting the quantity of a reducing agent based on metal powder to a level of 0.3% by weight of the mixture.

17. Bulb made of amber-coloured glass for a lighting system obtained from a blank or a tube produced by the method according to any one of claims 11 to 16, for use as an indicator or signalling means for motor vehicles.


**Patentansprüche**

1. Glas bildendes Gemisch aus einer Silizium-Natrium-Kalzium-Mischung zur Erzielung eines durchgefärbten Braunglases,
**dadurch gekennzeichnet,**
**dass** das Gemisch bezogen auf[LSU1] 100 Gew.-% des Gemisches 0,01 Gew.-% bis 1 Gew.-% Molybdändisulfid und 0,01 Gew.-% bis 7 Gew.-% Strontiumsulfid enthält.

2. Gemisch nach Anspruch 1,
**dadurch gekennzeichnet,**
**dass** der Strontiumsulfid-Prozentanteil kleiner als oder gleich 4 % des Gewichts des Gemisches ist.

3. Gemisch nach einem beliebigen der vorhergehenden Ansprüche,
**dadurch gekennzeichnet,**
**dass** der Molybdändisulfid-Prozentanteil kleiner als oder gleich 0,3 % des Gewichts der Gemisches ist.

4. Gemisch nach einem beliebigen der vorhergehenden Ansprüche,
**dadurch gekennzeichnet,**
**dass** der Eisengehalt des Gemisches kleiner als 0,04 % ist.

5. Gemisch nach einem beliebigen der vorhergehenden Ansprüche,
**dadurch gekennzeichnet,**
**dass** das Gemisch keinen Schwefel enthält.

6. Gemisch nach einem beliebigen der vorhergehenden Ansprüche,
**dadurch gekennzeichnet,**
**dass** das Gemisch bis zu 0,2 % pulvriges Aluminium enthält.

7. Braunglas,
**dadurch gekennzeichnet,**
**dass** es durch Schmelzen eines Gemisches nach einem beliebigen der vorhergehenden Ansprüche erzielt[LSU2) wird.

8. Durchgefärbtes Braunglas nach Anspruch 7,
**dadurch gekennzeichnet,**
**dass** das Glas bezogen auf[LSU3] 100 Gew.-% des Schmelzglases Folgendes enthält:

| | |
|---|---|
| $SiO_2$ | 65-72 % |
| $B_2O_3$ | 0,5-3% |
| $Na_2O$ | 5-15 % |
| $K_2O$ | 5-15 % |
| $LiO_2$ | 0,2-2% |
| CaO | 1-5% |
| BaO | 0,5-4% |
| $Al_2O_3$ | 0,5-3% |
| $MoO_3$ | 0,05-0,5 % |
| $SO_3$ | 0,1-0,7% |
| SrO | 2-7%, |

wobei $MoO_{3[LSU4]}$ und $SO_3$ aus dem Molybdändisulfid $MoS_2$ und dem Strontiumsulfid SrS derart erzielt werden, dass das Verhältnis $MoS_2$/SrS in dem Gemisch zwischen 0,015 und 0,04 liegt.

9. Braunglas nach Anspruch 8,
**dadurch gekennzeichnet,**
**dass** das Verhältnis $MoS_2$/SrS zwischen 0,015 und 0,025 liegt.

10. Braunglas nach Anspruch 9,

**dadurch gekennzeichnet,**
**dass** das Gemisch keinen Schwefel enthält.

11. Verfahren zur Herstellung eines Rohrs bzw. eines Rohlings (2, 5, 6, 7, 29) aus Braunglas aus einem Gemisch aus einer Silizium-Natrium-Kalzium-Mischung, bei dem eine bezogen auf[LSU5] 100 Gew.-% des Gemisches zwischen 65 und 72 % $SiO_2$ und zwischen 5 und 15 % $Na_2O$ enthaltende Mischung gebildet wird,
**dadurch gekennzeichnet,**
**dass** dieser Mischung 0,01 Gew.-% bis 1 Gew.-% Molybdändisulfid und 0,01 Gew.-% bis 7 Gew.-% Strontiumsulfid zugesetzt werden,
**dass** das Glas anschließend aus dem Gemisch in einer an sich bekannten Art und Weise in einem Ofen hergestellt wird und
**dass** das Rohr bzw. der Rohling mit der endgültigen Farbe ohne andere ergänzende Wärmebehandlung als die kontrollierte Abkühlung zur Beseitigung der Wärmespannungen direkt geformt werden.

12. Verfahren zur Herstellung eines Rohlings nach Anspruch 11,
**dadurch gekennzeichnet,**
**dass** der Strontiumsulfid-Prozentanteil kleiner als oder gleich 4 % des Gewichts des Gemisches ist.

13. Verfahren zur Herstellung eines Rohlings nach einem beliebigen der Ansprüche 11 und 12,
**dadurch gekennzeichnet,**
**dass** der Molybdändisulfid-Prozentanteil kleiner als oder gleich 0,3 % des Gewichts des Gemisches ist.

14. Verfahren zur Herstellung eines Rohlings nach einem beliebigen der Ansprüche 11 bis 13,
**dadurch gekennzeichnet,**
**dass** die Eisenpartikel magnetisch entfernt werden, damit der Eisengehalt des Gemisches kleiner als 0,04 % ist.

15. Verfahren zur Herstellung eines Rohlings nach einem beliebigen der Ansprüche 11 bis 14,
**dadurch gekennzeichnet,**
**dass** das Gemisch keinen Schwefel enthält.

16. Verfahren zur Herstellung eines Rohlings nach einem beliebigen der Ansprüche 11 bis 15,
**dadurch gekennzeichnet,**
**dass** der Farbton des Glases durch Änderung der Oxidoreduktionsparameter innerhalb des Heizofens durch Justierung[LSU6] der Menge eines Reduktionsmittels aus einem metallischen Pulver bis zu 0,3 Gew.-% des Gemisches kontrolliert wird.

17. Kolben[LSU7] aus Braunglas für ein Beleuchtungssystem, welcher aus einem Rohling bzw. einem Rohr erzielt wird, die mit dem Verfahren nach einem beliebigen der Ansprüche 11 bis 16 hergestellt werden, zur Verwendung als Blinklicht oder als Kraftfahrzeug-Signalisierungsmittel.

FIG.1

FIG.1A

FIG.1B

FIG.1C

FIG.2

FIG.3

EP 1 697 267 B1

FIG.4

EP 1 697 267 B1

## RÉFÉRENCES CITÉES DANS LA DESCRIPTION

**Documents brevets cités dans la description**

- EP 1193226 A